# EUROPEAN PATENT APPLICATION

(11) **EP 2 138 865 A1**
(43) Date of publication of application: **30.12.2009**
(21) Application number: 08159003.6
(22) Date of filing: 25.06.2008
(51) Int. Cl.: G01S 17/89

(54) **Method and device for recording 3D images of a scene**

(71) Applicant: IEE International Electronics & Engineering S.A.R.L., 6468 Echternach (LU)
(72) Inventor: The designation of the inventor has not yet been filed
(74) Representative: Office Freylinger

(57) **Abstract**

A method for 3D imaging of a scene is disclosed wherein a modulation signal and a first reference signal, which is correlated to said modulation signal, are generated and wherein the modulation signal is used to drive a first illumination unit in order to generate intensity-modulated light, which is emitted onto said scene. The so illuminated scene is then imaged onto a pixel array comprising at least one pixel e.g. by use of an optical system. The method further comprises the detection, in at least one pixel of the pixel array, of intensity-modulated light reflected from the scene onto said pixel, the conversion of said detected light into a corresponding reflected light signal and the subsequent demodulation, for at least one pixel, of said reflected light signal by means of said first reference signal in order to obtain a signal representative of the phase difference between the emitted light and the reflected light detected in the pixel. According to the invention, step of demodulating said reflected light signal comprises the steps of combining said reflected light signal and said first reference signal additively to form a sum of said reflected light signal and said first reference signal and subsequently applying the sum of said reflected light signal and said first reference signal to a functional block having a nonlinear characteristic.

## Description

### Technical field

The present invention generally relates to a method of recording 3D images of a scene based upon the time-of-flight measurement principle and to a 3D imager configured for implementing the method.

### Background Art

The time-of-flight measurement principle is well known in the field of 3D imaging. 3D cameras (or range cameras) are known that acquire range images in real time based on the time-of-flight (TOF) principle. Such camera generally comprises a light source emitting sinusoidally modulated light into the scene to be imaged in 3D and a pixel array on which the scene is imaged by an optical system. The camera then correlates the light detected in the pixels with the light emitted and determines, for each pixel, the phase difference between emitted and received light. This phase difference is proportional to the radial distance between the camera and the part of the scene that is imaged onto the pixel concerned. As the demodulation is synchronously performed for all pixels of the pixel array, the camera provides an array of distance values associated each to a particular pixel and thus to a particular part of the scene. In the following, we will also use "phase" instead of "phase difference"; it is understood that the phase of the emitted light or a clock signal, used for modulating the emitted light or derived from the modulation of the emitted light, then serves as a reference phase. It should also be noted that, as used herein, "phase" and "phase difference" always refer to the phase of the modulation, not to the phase of the carrier wave that is modulated.

The demodulation process, which leads to the determination of the phase of the light impinging on the pixels, can be carried out in different ways. EP 0 792 555 discloses a 3D camera with a one- or two-dimensional pixel array, each pixel thereof comprising a light-sensitive part, in which charge carriers are generated in response to light impinging thereon, and a light-insensitive part with a plurality of electrical switches and storage cells associated with a respective one of these switches. The charges that are integrated in the light-sensitive part are transferred to the storage cells by sequential actuation of the electrical switches. The electrical switches are controlled in such a way that the charges transferred to a particular storage cell belong to a time interval or time intervals at a known phase of the emitted light. The charges accumulated in the different storage cells are then used to determine the phase of the light having impinged on the pixel, its amplitude and a background light level. More details on that principle of measurement can be found in the paper "The Lock-In CCD - Two-dimensional Synchronous Detection of Light" by Spirig et al. in IEEE Journal of Quantum Electronics 31 (1995), 1705-1708. An improvement of this method of demodulation is described in EP 1 659 418.

US 6,825,455 discloses another way for demodulating the detected light. In this document, the light-sensitive part of each pixel comprises at least two modulation photogates and the light-insensitive region comprises accumulation gates, each of which is associated to a respective modulation photogate. During a first exposition interval, charge carriers generated in the light-sensitive part of the pixel in response to light impinging thereon are exposed to a first voltage gradient modulated at the frequency of the modulation of the emitted light and thereby caused to drift into a first accumulation gate when the voltage is of a first polarity and into a second accumulation gate when the voltage is of the opposite polarity. The charges qₐ and q_{b} so accumulated in the first and second modulation gates, respectively, are determined. During a second exposition interval, charge carriers generated in the light-sensitive part of the pixel are exposed to a second voltage gradient modulated at the same frequency but shifted by a known phase with respect to the first voltage gradient. The charge carrier are again caused to drift into two different accumulation gates in accordance with the polarity of the voltage applied, giving rise to accumulated charges q_{c} and q_{d}. The phase of the light impinging on the pixel is determined using the values of the accumulated charges. If the phase difference between the voltage gradients amounts to 90°, the phase of the light can be determined as ϕ=arctan[(q_{c}-q_{d})/(qₐ-q_{b})].

In both described prior art devices, the demodulation or the cross-correlation of the received light intensity signal with the reference signal is achieved on the pixel itself by multiplying the photo current signal with the reference signal and a subsequent low-pass filtering or integration of the product. The multiplication operation at the pixel itself requires the pixel to comprise a plurality of accumulation gates or storage cells with associated switching gates which are located immediately adjacent the light sensitive area of the pixel. Furthermore, the reference signal has to be supplied to each pixel of a sensor array in order to operate the switching gates or the modulation photogates of the pixel. As a result the prior art pixels are rather complex in structure and require a lot of space on the sensor array.

### Technical problem

It is an object of the present invention to provide an alternative method for the demodulation of a 3D imager signal and a 3D imager pixel implementing this method.

### General Description of the Invention

To achieve this object, the present invention proposes a method for 3D imaging of a scene wherein a modulation signal and a first reference signal, which is correlated to said modulation signal, are generated and wherein the modulation signal is used to drive a first illumination unit in order to generate intensity-modulated light, which is emitted onto said scene. The so illuminated scene is then imaged onto a pixel array comprising at least one pixel e.g. by use of an optical system. The method further comprises the detection, in at least one pixel of the pixel array, of intensity-modulated light reflected from the scene onto said pixel, the conversion of said detected light into a corresponding reflected light signal and the subsequent demodulation, for at least one pixel, of said reflected light signal by means of said first reference signal in order to obtain a signal representative of the phase difference between the emitted light and the reflected light detected in the pixel. According to the invention, step of demodulating said reflected light signal comprises the steps of combining said reflected light signal and said first reference signal additively to form a sum of said reflected light signal and said first reference signal and subsequently applying the sum of said reflected light signal and said first reference signal to a functional block having a nonlinear characteristic.

Instead of multiplying the reflected light signal and the reference signal by means of switching gates adjacent to the light sensitive area of the pixel, the present invention proposes to add the reflected light signal and the reference signal and to apply the so formed sum to a functional block with nonlinear characteristic. The result of this addition of the signals with the subsequent operation at the nonlinear characteristic is the same than the result of a multiplication of the two signals, hence the resultant component is called product. From this product, the desired mixing or cross-correlation result can be easily obtained, like in the prior art devices, by a subsequent low-pass filtering or integration of the product.

In contrast to the direct multiplication at the pixel, the addition of the two signals does not rely on controlled switching elements nor on accumulation gates located adjacent the light sensitive area of the pixel. Hence the pixel can be configured less complex in structure than the prior art pixels and accordingly is much smaller than these prior art pixels. As a result, the number of pixels on a pixel array having defined dimensions may be increased so that the imager offers a higher resolution than state of the art imagers.

The modulation signal and a first reference signal are preferably sine waves having the same frequency. However other wave forms like rectangular or square waves are also possible. Furthermore, the reference signal may have a wave form which is different from the one of the modulation signal and/or a different amplitude. The first reference signal has to be correlated to the modulation signal, which means that the first reference signal has a predefined phase with respect to the modulation signal. The phase difference between the first reference signal and the modulation signal may be any possible value between 0 and 360°, provided that the phase difference is constant over the measurement cycle.

It will be noted that the present invention applies as well to 0-dimensional pixel arrays, i.e. a single pixel, as well as to 1-dimensional (pixel line) or 2-dimensional arrays.

In one possible embodiment, said step of additively combining said reflected light signal and said first reference signal is achieved electrically in a separate adder circuit, said adder circuit being operatively connected between said pixel and said functional block having a nonlinear characteristic. In this embodiment, the photo current which is generated by the pixel as a result of the incident light and the first reference signal are supplied to the adder circuit, and the output of the adder circuit is operatively connected to the functional block with the nonlinear characteristic. Different embodiments of adder circuits are well known to the skilled person. The adder circuit may e.g. comprise a resistive summing network or at least one operational amplifier, where the input signals are summed into the virtual ground summing node at the input of the operational amplifier. It will be noted that the adder circuit as well as the nonlinear functional block are not required to be located immediately adjacent the light sensitive area of the pixel. The adder circuit may be located outside of the optical area of the pixel array, i.e. at the periphery of this optical area. It follows that the first reference signal does not need to be supplied across the pixel array to the different pixels but only to the adder circuits, which are arranged outside of the optical area. This eliminates a number of signal lines with associated signal drivers for the reference signal across the pixel array and consequently the possibility of crosstalk from the reference signal to the very sensitive pixels. As a result the determination of the 3D information is more accurate.

In another embodiment of the invention, the step of additively combining said reflected light signal and said first reference signal is achieved optically in said pixel and comprises the steps of generating intensity-modulated reference light by driving a second illumination unit using said first reference signal and emitting said intensity-modulated reference light directly onto said pixel array. In this embodiment the incident light signal and the reference signal are additively combined within the pixel, which generates a photo current corresponding to the sum of the two light signals. The second illumination unit may preferably be arranged at the periphery of the optical area of the pixel array. The arrangement is preferably such that one second illumination unit emits the intensity-modulated reference light to a plurality of pixels or even to all the pixels of the array. The skilled person will note, that here again, the first reference signal does not need to be supplied across the pixel array to the different pixels but only to the second illumination unit arranged outside of the optical area. This eliminates a number of signal lines with associated signal drivers for the reference signal across the pixel array and consequently the possibility of crosstalk from the reference signal to the very sensitive pixels. Furthermore the optical addition of the reference light enables a very precise and stable timing of the demodulation. As a result the determination of the 3D information is more accurate.

The sum of the incident light signal and the reference signal is applied to the functional block with nonlinear characteristic. Possible embodiments of a device with nonlinear characteristic include a simple diode or a transistor, for instance a MOSFET transistor. The MOSFET has a square law characteristic which is particularly good for mixing purposes. It follows that the functional block comprises preferably at least one transistor which provides the nonlinear characteristic.

The light received by the pixel contains several components: the background light (which can be considered as constant during a measuring cycle), a constant component of the modulated light reflected from the scene and an alternating component of the modulated light reflected from the scene. In order to avoid that the background light and the constant component of the modulated light reflected from the scene influence the determination of the distance information by shifting the operating point on the nonlinear characteristic, the functional block comprises preferably circuitry for elimination the low frequency component of the sum of the reflected light signal and said first reference signal.

In the case of optical combination of reflected light signal with the reference light, the functional block with nonlinear characteristic may be either integrated into the pixel or be at least partially configured as a circuit separate from the pixel. In the latter embodiment, a part of the functional block with nonlinear characteristic may be integrated into the pixel while another part of the block is configured as a separate circuit or the entire functional block may be a circuit separate from the pixel.

In order to efficiently eliminate parasitic effects, it may be desirable to demodulate the reflected light signal with different reference signals (having e.g. different phase or different wave form). A preferred embodiment of the 3D imaging method, therefore comprises the steps of generating at least one second reference signal different from said first reference signal, said at least one second reference signal being correlated to said modulation signal, and demodulating, for at least one pixel, said reflected light signal by means of said second reference signal in order to obtain a second signal representative of the phase difference between the emitted light and the reflected light. As for the first reference signal, the second reference signal has to be correlated to the modulation signal, which means that the second reference signal has a predefined phase with respect to the modulation signal. The phase difference between the second reference signal and the modulation signal may have any possible value between 0 and 360°, provided that the phase difference is constant over the measurement cycle. The phase difference between the second reference signal and the modulation signal may be different from the corresponding phase difference between the first reference signal and the modulation signal. Furthermore, the wave form of the second reference signal may be different from the signal form of the first reference signal.

In a variant of this embodiment, said demodulation of said reflected light signal by means of said first reference signal and said demodulation of said reflected light signal by means of said second reference signal are carried out simultaneously in two separate pixels or groups of pixels of said pixel array. This may be achieved by driving a second illumination unit with the first reference signal and emitting a first reference light to the first group of pixels and by simultaneously driving a third illumination unit with the second reference signal for emitting a second reference light to the second group of pixels. If the different groups of pixels see the same part of the scene, this method enables the simultaneous demodulation of the reflected light by the two different reference signals.

In another variant, the demodulation of said reflected light signal by means of said first reference signal and said demodulation of said reflected light signal by means of said second reference signal are carried out sequentially in at least one pixel of said pixel array. In this variant, the second illumination unit is sequentially driven by the first and the second reference signals.

While the invention has been described up to this point in relation with a method for 3D imaging, it is clear to the skilled person that the present invention also relates to a 3D imaging device. Such a device for 3D imaging of a scene comprises at least one signal generator for generating a modulation signal and a first reference signal, said first reference signal being correlated to said modulation signal and a first illumination unit for generating intensity-modulated light in response to said modulation signal and for emitting said intensity modulated light onto said scene. The 3D imaging device further comprises a pixel array including at least one pixel and an associated evaluation circuitry, said at least one pixel and associated evaluation circuitry being configured for detecting intensity-modulated light reflected from the scene onto said pixel and converting said detected light into a corresponding reflected light signal and for demodulating said reflected light signal by means of said first reference signal in order to obtain a signal representative of the phase difference between the emitted light and the reflected light detected in the pixel. According to the invention said at least one pixel and associated evaluation circuitry are configured and arranged for combining said reflected light signal and said first reference signal additively to form a sum of said reflected light signal and said first reference signal and for subsequently applying the sum of said reflected light signal and said first reference signal to a functional block having a nonlinear characteristic.

In a possible embodiment said associated evaluation circuitry comprises at least one adder circuit for electrically adding said reflected light signal and said first reference signal, said adder circuit being operatively connected between said pixel and said functional block having a nonlinear characteristic. In another embodiment said pixel and associated circuitry comprise a second illumination unit operatively coupled to said at least one signal generator, said second illumination unit to be driven by said first reference signal for generating intensity-modulated reference light and emitting said intensity-modulated reference light directly onto said pixel array, so that said reflected light signal and said first reference signal are optically combined or added in said pixel.

The functional block with nonlinear characteristic may be either integrated into the pixel or at least partially configured as a circuit separate from the pixel.

### Brief Description of the Drawings

Preferred embodiments of the invention will now be described, by way of example, with reference to the accompanying drawings in which:
Fig. 1 schematically shows the different components involved in the 3D imaging of a target scene using a first embodiment of the 3D imaging device;
Fig. 2 schematically shows the different components involved in the 3D imaging of a target scene using a second embodiment of the 3D imaging device;
Fig. 3 a first variant of the 3D imaging device of fig. 2;
Fig. 4 a second variant of the 3D imaging device of fig. 2;
Fig. 5 is a block schematic diagram of an embodiment of several components of the 3D imager.

### Description of Preferred Embodiments

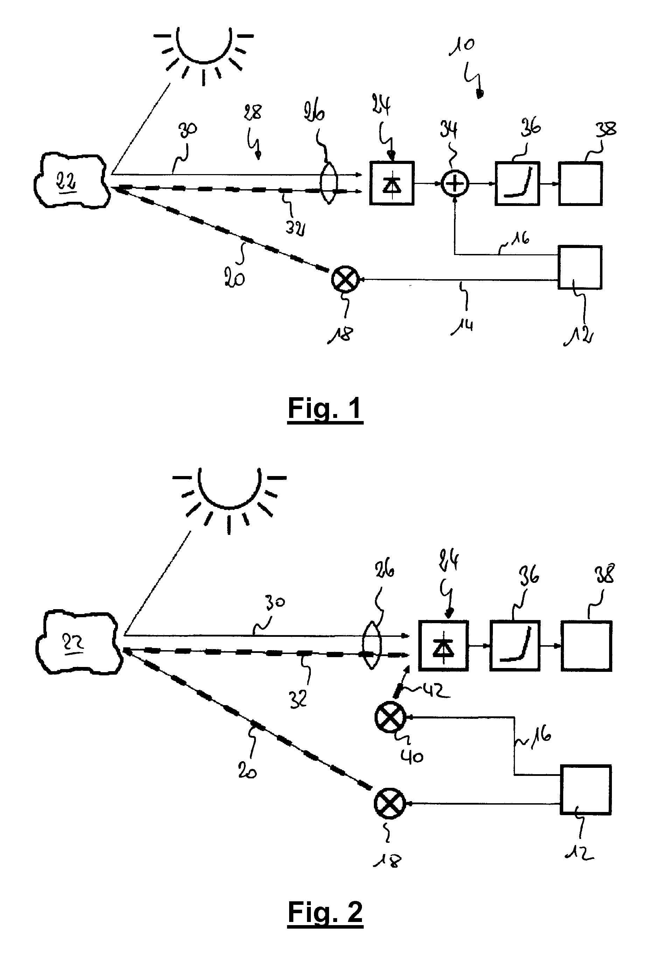

Fig 1 is a schematic illustration of a 3D imaging method using a first embodiment of a 3D imaging device. The 3D imaging device 10 comprises a signal generator 12 for generating a modulation signal 14 and a first reference signal 16, which is correlated to the modulation signal 14. The modulation signal is supplied to a first illumination unit 18 in order to generate an intensity modulated light beam 20. The intensity modulated light 20 is emitted towards a target scene 22. The so illuminated scene 22 is then imaged onto a pixel array comprising at least one pixel 24 e.g. by use of an optical system 26. The pixel 24 is represented in the drawings as a photodiode, in which the incident light is converted into an electrical signal.

The light 28 received by the pixel contains several components: the background light 30 (which is due to the natural illumination of the scene e.g. by the sun and which can be considered as constant during a measuring cycle), and the reflected portion 32 of the modulated light. This reflected modulated light 32 itself contains a constant component of the modulated light reflected from the scene and an alternating component of the modulated light reflected from the scene. At the pixel, the sum of these different components is converted into an electrical photo current signal.

The reflected portion 32 of the modulated light carries information about the distance of the target 22 with respect to the pixel. In order to demodulate this reflected modulated light 32, the electrical photo current signal and the first reference signal 16 are added in an adder circuit 34 and the so formed sum is applied to a functional block with nonlinear characteristic 36. The resulting product is then supplied to a low-pass filter or to an integrator 38 in order to obtain the desired cross-correlation result.

In order to reduce the influence of the background light and the constant component of the modulated light reflected from the scene on the determination of the distance information by shifting the operating point on the nonlinear characteristic, the functional block 36 comprises preferably circuitry for elimination the low frequency component of the sum of the reflected light signal and said first reference signal.

In the embodiment shown in Fig. 1, the reflected light signal and the reference signal are added electrically in the adder circuit 34. In contrast to this, Fig. 2 shows an embodiment, in which the reflected light signal and the reference are added optically directly in the pixel 24. In this embodiment, the reference signal 16 is supplied to a second illumination unit 40, which is arranged for emitting light directly onto the pixel 24. The second illumination unit 40 is driven by the reference signal 16 and consequently emits an intensity modulated reference light 42 onto the pixel 24. The pixel 24 thus receives the intensity modulated light 42 in addition to the reflected modulated light 32 and the reflected background light 30, and accordingly generates a photo current corresponding to the sum of the different light signals. This photo current is then applied to the functional block with nonlinear characteristic 36.

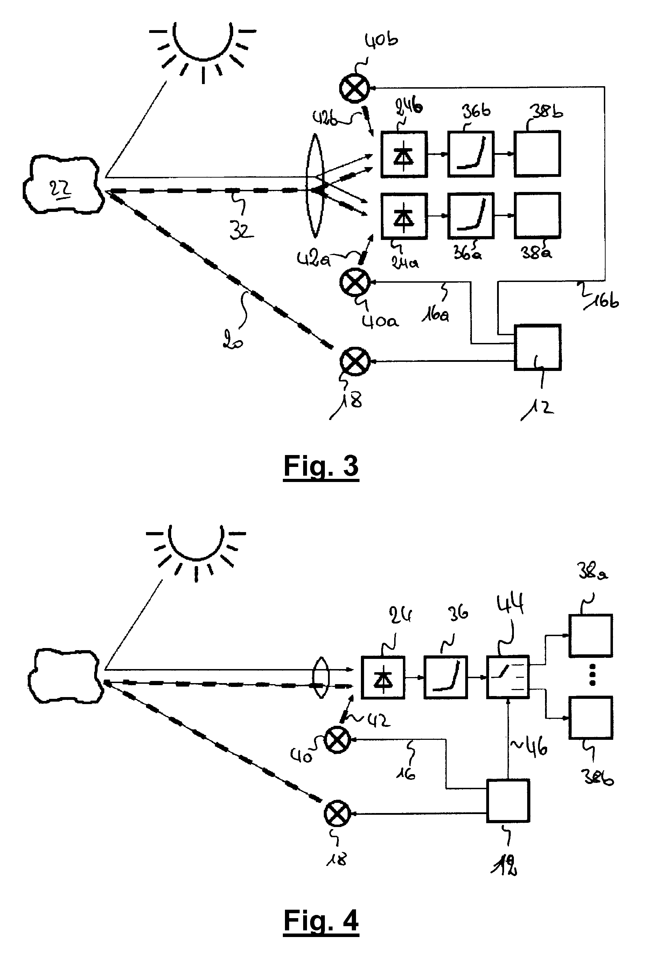

Depending on the situation, it may be desirable to demodulate the reflected light signal with different reference signals (having e.g. different phase or different wave form) in order to efficiently eliminate parasitic effects. Figs. 3 and 4 show different embodiments for achieving this goal.

Fig 3 shows an embodiment of a 3D imager which allows simultaneous demodulation of the received signals by two different reference signals. The signal generator 12 generates a first reference signal 16a which is fed to an illumination unit 40a and a second reference signal 16b, which is fed to a second illumination unit 40b. Illumination unit 40a is arranged so as to emit a first intensity modulated reference light 42a to a first pixel 24a of the imager, while illumination unit 40b is arranged so as to emit a second intensity modulated reference light 42b to a second pixel 24b of the imager. If the first and second pixels see the same part of the scene, this device enables the simultaneous demodulation of the reflected light by the two different reference signals.

An embodiment for the sequential demodulation of the received signals by different reference signals is shown in Fig. 4. In this embodiment, the imager comprises a plurality of integrators or low-pass filters 38a, 38b, ..., and a switching element 44 operatively connected between the nonlinear functional block and the different integrators or low-pass filters 38a, 38b, .... The switching element 44 is configured to apply the output of the functional block 36 to a selected one of the integrators under the control of a control signal 46, which is preferably generated by the signal generator 12. This embodiment allows to sequentially store the demodulated signal (after nonlinear transformation of the sum) for each individual reference signal in one of the different integrators 38a, 38b, ....

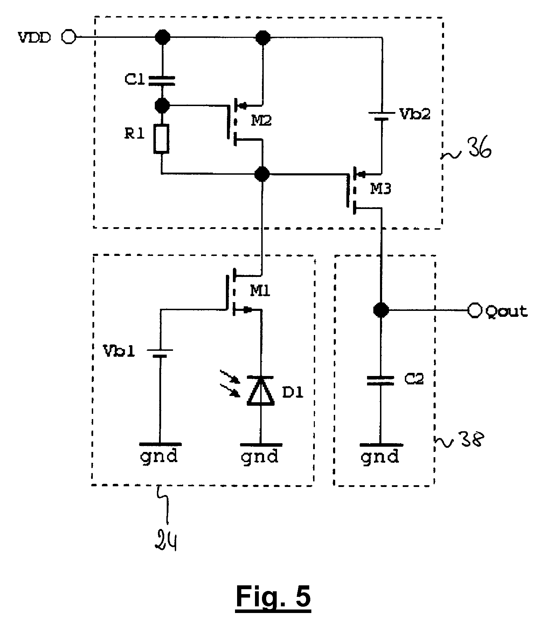

Fig. 5 is a block schematic diagram of an embodiment of several components of the 3D imager. It shows one possible embodiment of the light sensor 24, the functional block with nonlinear characteristic 36 and the integrator 38. As shown in Fig. 5, the light sensor is formed by a photo diode D1 associated to transistor M1 and bias voltage supply Vb1. Transistor M1 maintains the voltage drop across the diode D1 constant in order to reduce the influence of the depletion layer capacitance of D1.

Then functional block 36 comprises filtering circuitry for eliminating the low frequency components of the sum of the reflected light signal and the reference signal and a device with a nonlinear characteristic. The filtering circuitry comprises a transistor M2, a capacitance C1 and a resistor R1, which together form a frequency dependent impedance for suppressing the constant component of the photo current. Transistor M3 and the bias voltage supply Vb2 form the device with nonlinear characteristic. The integrator 38 finally comprises a capacitance C2, in which the nonlinear transformed signal is integrated.

### Legend:

- 10: 3D imaging device
- 12: signal generator
- 14: modulation signal
- 16, 16a, 16b: reference signal
- 18: first illumination unit
- 20: intensity modulated light beam
- 22: target scene
- 24, 24a, 24b: pixel
- 26: optical system
- 28: light received by the pixel
- 30: background light
- 32: reflected portion of the modulated light
- 34: adder circuit
- 36, 36a, 36b: functional block with nonlinear characteristic
- 38, 38a, 38b: integrator
- 40, 40a, 40b: second illumination unit
- 42, 42a, 42b: intensity modulated reference light
- 44: switching element
- 46: control signal for switching element
- D1: photo diode
- M1: transistor
- Vb1: bias voltage supply
- M2: transistor
- C1: capacitance
- R1: resistor
- M3: Transistor
- Vb2: bias voltage supply

## Claims

1. A method for 3D imaging of a scene comprising the steps of:
generating a modulation signal and a first reference signal, said first reference signal being correlated to said modulation signal;
generating intensity-modulated light by driving a first illumination unit using said modulation signal and emitting said intensity modulated light onto said scene;
imaging the scene onto a pixel array, said pixel array comprising at least one pixel;
detecting, in at least one pixel, intensity-modulated light reflected from the scene onto said pixel and converting said detected light into a corresponding reflected light signal;
demodulating, for at least one pixel, said reflected light signal by means of said first reference signal in order to obtain a signal representative of the phase difference between the emitted light and the reflected light detected in the pixel;
**characterized in that** said step of demodulating said reflected light signal comprises the steps of
combining said reflected light signal and said first reference signal additively to form a sum of said reflected light signal and said first reference signal; and
subsequently applying the sum of said reflected light signal and said first reference signal to a functional block having a nonlinear characteristic.

2. The method as claimed in claim 1, wherein said step of additively combining said reflected light signal and said first reference signal is achieved electrically in a separate adder circuit, said adder circuit being operatively connected between said pixel and said functional block having a nonlinear characteristic.

3. The method as claimed in claim 1, wherein said step of additively combining said reflected light signal and said first reference signal is achieved optically in said pixel and comprises the steps of generating intensity-modulated reference light by driving a second illumination unit using said first reference signal and emitting said intensity-modulated reference light directly onto said pixel array.

4. The method as claimed in claim 3, wherein said functional block with nonlinear characteristic is integrated into the pixel.

5. The method as claimed in claim 3, wherein said functional block with nonlinear characteristic is at least partially configured as a circuit separate from the pixel.

6. The method as claimed in any one of claims 1 to 5, comprising the steps of generating at least one second reference signal different from said first reference signal, said at least one second reference signal being correlated to said modulation signal, and
demodulating, for at least one pixel, said reflected light signal by means of said second reference signal in order to obtain a second signal representative of the phase difference between the emitted light and the reflected light.

7. The method as claimed in claim 6, wherein said demodulation of said reflected light signal by means of said first reference signal and said demodulation of said reflected light signal by means of said second reference signal are carried out simultaneously in two separate pixels of said pixel array.

8. The method as claimed in claim 6, wherein said demodulation of said reflected light signal by means of said first reference signal and said demodulation of said reflected light signal by means of said second reference signal are carried out sequentially in at least one pixel of said pixel array

9. A device for 3D imaging of a scene comprising:
at least one signal generator for generating a modulation signal and a first reference signal, said first reference signal being correlated to said modulation signal,
a first illumination unit for generating intensity-modulated light in response to said modulation signal and for emitting said intensity modulated light onto said scene
a pixel array comprising at least one pixel and an associated evaluation circuitry, said at least one pixel and associated evaluation circuitry being configured for detecting intensity-modulated light reflected from the scene onto said pixel and converting said detected light into a corresponding reflected light signal and for demodulating said reflected light signal by means of said first reference signal in order to obtain a signal representative of the phase difference between the emitted light and the reflected light detected in the pixel;
**characterized in that** said at least one pixel and associated evaluation circuitry are configured and arranged for combining said reflected light signal and said first reference signal additively to form a sum of said reflected light signal and said first reference signal and for subsequently applying the sum of said reflected light signal and said first reference signal to a functional block having a nonlinear characteristic.

10. The device as claimed in claim 9, wherein said associated evaluation circuitry comprises at least one adder circuit for electrically adding said reflected light signal and said first reference signal, said adder circuit being operatively connected between said pixel and said functional block having a nonlinear characteristic.

11. The device as claimed in claim 9, wherein said pixel and associated circuitry comprise a second illumination unit operatively coupled to said at least one signal generator, said second illumination unit to be driven by said first reference signal for generating intensity-modulated reference light and emitting said intensity-modulated reference light directly onto said pixel array, so that said reflected light signal and said first reference signal are optically combined in said pixel.

12. The device as claimed in claim 11, wherein said functional block with nonlinear characteristic is integrated into the pixel.

13. The device as claimed in claim 11, wherein said functional block with nonlinear characteristic is at least partially configured as a circuit separate from the pixel.
